# EUROPEAN PATENT APPLICATION

(11) **EP 4 495 155 A1**
(43) Date of publication of application: **22.01.2025**
(21) Application number: 23770796.3
(22) Date of filing: 14.03.2023
(51) Int. Cl.: C08G 18/66, C08G 18/00, C08G 18/08, C08G 18/10, C08G 18/42, C08G 18/75, C09D 11/023

(54) **POLYURETHANE DISPERSION AND INK COMPOSITION**

(30) Priority: 15.03.2022 JP 2022040233
(71) Applicant: Mitsui Chemicals, Inc., Tokyo 104-0028 (JP)
(72) Inventor: YAMASHITA, Tatsuya, Sodegaura-shi, Chiba 299-0265 (JP); KOUDA, Chikako, Sodegaura-shi, Chiba 299-0265 (JP); FUKUDA, Kazuyuki, Sodegaura-shi, Chiba 299-0265 (JP)
(74) Representative: Hoffmann Eitle
(86) International application number: PCT/JP2023/009890
(87) International publication number: WO 2023/176841

(57) **Abstract**

A polyurethane dispersion consists of a polyurethane resin dispersed in water.
The polyurethane resin is a reaction product of an isocyanate group-terminated prepolymer and a chain extender. The isocyanate group-terminated prepolymer is a reaction product of a polyisocyanate component and a polyol component containing a macropolyol and a hydrophilic group-containing active hydrogen compound. The macropolyol contains an aromatic ring-containing polyester polyol. The polyurethane resin has an acid value of 7.0 mg KOH/g or more and 14.0 mg KOH/g or less. The total of the urethane group concentration and the urea group concentration of the polyurethane resin is 20.0% by mass or less. The polyurethane resin has an aromatic ring concentration of 5.0% by mass or more and 15.0% by mass or less.

## Description

### TECHNICAL FIELD

The present invention relates to a polyurethane dispersion and an ink composition.

### BACKGROUND ART

It has been conventionally known to perform textile printing on a fabric by ejecting droplets of an ink composition from a nozzle using an inkjet method. The ink composition contains, for example, a coloring material and a resin for dispersing the coloring material. When the coloring material is a pigment, the ink composition contains a binder resin for physically fixing the pigment to the fabric.

As such a resin, for example, a pigment dispersant containing a urethane resin obtained by reacting a polyester polyol obtained by reacting isophthalic acid and a polyol, a polyol having a hydrophilic group, and a polyisocyanate has been proposed (see, for example, EXAMPLE 2 in Patent Document 1 below).

In addition, as a binder resin, an aqueous pigment composition containing a urethane resin obtained by reacting a polyester polyol obtained by reacting isophthalic acid and a polyol, a polyol having a hydrophilic group, and a polyisocyanate has been proposed (see, for example, EXAMPLE 2 in Patent Document 1 below).

### Citation List

### Patent Documents

Patent Document 1: Japanese Unexamined Patent Publication No. 2015-174876
Patent Document 2: Japanese Unexamined Patent Publication No. 2015-163678

### SUMMARY OF THE INVENTION

### PROBLEM TO BE SOLVED BY THE INVENTION

On the other hand, when a fabric (particularly, chemical fiber) is subjected to textile printing, the fabric may be pretreated in order to enhance interaction between the fabric and the ink composition.

When the fabric is pretreated, the interaction between the fabric and the ink composition causes the ink composition to aggregate on a surface of the fabric, so that impregnation of the fabric with the ink composition is suppressed. This results in higher color density (improved color developability) on the surface of the fabric. On the other hand, when the impregnation of the fabric with the ink composition is suppressed, adhesion property between the fabric and the ink composition is deteriorated. That is, the color developability and the adhesion property have a conflicting (trade-off) relationship.

When a resin adhered to the surface of the fabric does not follow deformation of the fabric, the resin may peel off. Therefore, the resin is required to have followability to the deformation of the fabric.

In particular, since the pigment dispersant of Patent Document 1 and the aqueous pigment composition of Patent Document 2 have a high aromatic ring concentration in the polyurethane resin, their cohesive forces are increased and the resin becomes harder. As a result, the followability to the deformation of the fabric is disadvantageously reduced.

The present invention provides a polyurethane dispersion having excellent color developability and adhesion property, and having excellent followability to the deformation of the fabric, in the case of performing textile printing on a fabric, and an ink composition containing the polyurethane dispersion.

### MEANS FOR SOLVING THE PROBLEM

The present invention [1] includes a polyurethane dispersion comprising a polyurethane resin dispersed in water, in which the polyurethane resin is a reaction product of an isocyanate group-terminated prepolymer and a chain extender, the isocyanate group-terminated prepolymer is a reaction product of a polyisocyanate component and a polyol component containing a macropolyol and a hydrophilic group-containing active hydrogen compound, the macropolyol contains an aromatic ring-containing polyester polyol, the polyurethane resin has an acid value of 7.0 mg KOH/g or more and 14.0 mg KOH/g or less, a total of a urethane group concentration and a urea group concentration of the polyurethane resin is 20.0% by mass or less, and the polyurethane resin has an aromatic ring concentration of 5.0% by mass or more and 15.0% by mass or less.

The present invention [2] includes the polyurethane dispersion, in which the total of the urethane group concentration and urea group concentration of the polyurethane resin is 10.0% by mass or less.

The present invention [3] includes the polyurethane dispersion described in [1] or [2], in which the polyisocyanate component contains an alicyclic polyisocyanate.

The present invention [4] includes the polyurethane dispersion described in any one of the above-described [1] to [3], in which the hydrophilic group-containing active hydrogen compound is an anionic group-containing active hydrogen compound.

The present invention [5] includes the polyurethane dispersion described in any one of the above-described [1] to [4], in which the aromatic ring-containing polyester polyol is a reaction product of a polyhydric alcohol and a polybasic acid, and the polybasic acid contains an aromatic ring-containing polybasic acid and an aromatic ring-free polybasic acid.

The present invention [6] includes the polyurethane dispersion described in any one of the above-described [1] to [5], in which the aromatic ring-containing polybasic acid is isophthalic acid.

The present invention [7] includes an ink composition containing the polyurethane dispersion described in any one of the above-described [1] to [6].

The present invention [8] includes the ink composition described in [7] for textile printing on a fabric or a leather.

### EFFECTS OF THE INVENTION

In the polyurethane dispersion of the present invention, the polyurethane resin has an acid value of 7.0 mg KOH/g or more and 14.0 mg KOH/g or less. When the above-described acid value is 7.0 mg KOH/g or more, the polyurethane dispersion has excellent color developability in the case of performing textile printing on a fabric. When the above-described acid value is 14.0 mg KOH/g or less, the polyurethane dispersion has excellent adhesion property in the case of performing textile printing on the fabric.

In this polyurethane dispersion, the total of the urethane group concentration and urea group concentration of the polyurethane resin is 20.0% by mass or less. When the total of the urethane group concentration and the urea group concentration described above is 20.0% by mass or less, the polyurethane dispersion has excellent followability to the deformation of the fabric in the case of performing textile printing on the fabric.

In this polyurethane dispersion, the polyurethane resin has an aromatic ring concentration of 5.0% by mass or more and 15.0% by mass or less. When the above-described aromatic ring concentration is 5.0% by mass or more, the polyurethane dispersion has excellent color developability and adhesion property. When the above-described aromatic ring concentration is 15.0% by mass or less, the polyurethane dispersion has excellent followability to the deformation of the fabric.

The ink composition of the present invention contains the polyurethane dispersion of the present invention. Therefore, in the case of performing textile printing on a fabric, the ink composition has excellent adhesion property and followability.

### BRIEF DESCRIPTION OF THE DRAWINGS

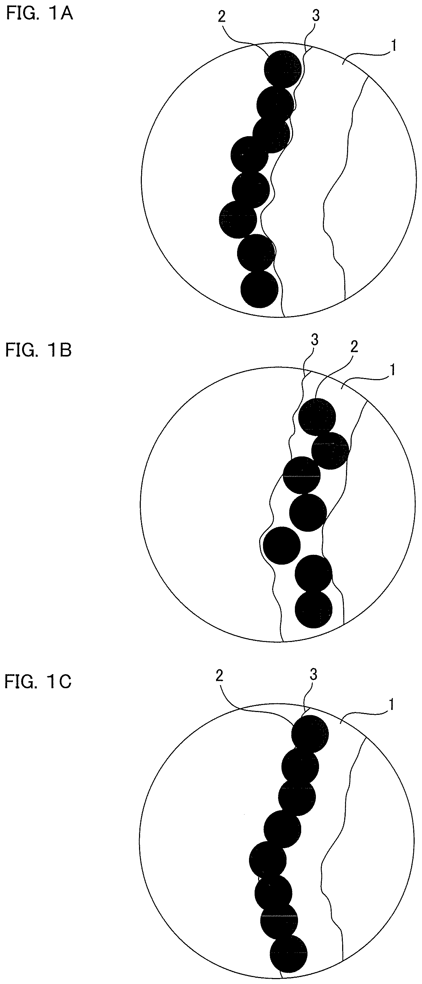

FIGS. 1A to 1C each show a schematic diagram of a textile printed fabric (textile printed product): FIG. 1A shows a textile printed product having excellent color developability but having deteriorated adhesion property, FIG. 1B shows a textile printed product having excellent adhesion property but having lowered color developability, and FIG. 1C shows a textile printed product having both color developability and adhesion property.

### DESCRIPTION OF THE EMBODIMENTS

A polyurethane dispersion consists of a polyurethane resin dispersed in water.

The polyurethane resin is a reaction product of an isocyanate group-terminated prepolymer and a chain extender.

### <Isocyanate Group-Terminated Prepolymer>

The isocyanate group-terminated prepolymer is a reaction product of a polyisocyanate component and a polyol component containing a macropolyol and a hydrophilic group-containing active hydrogen compound.

### [Polyisocyanate Component]

The polyisocyanate component contains a polyisocyanate and/or a derivative of the polyisocyanate.

### (Polyisocyanate)

Examples of the polyisocyanate include aliphatic polyisocyanate, alicyclic polyisocyanate, aromatic polyisocyanate, and araliphatic polyisocyanate.

Examples of the aliphatic polyisocyanate include aliphatic diisocyanate. Examples of the aliphatic diisocyanate include 1,6-hexamethylene diisocyanate (1,6-HDI), 1,5-pentamethylene diisocyanate (1,5-PDI), tetramethylene diisocyanate, trimethylene diisocyanate, 1,2-, 2,3-, or 1,3-butylene diisocyanate, and 2,4,4- or 2,2,4-trimethylhexamethylene diisocyanate. As the aliphatic polyisocyanate, preferably, 1,6-HDI and 1,5-PDI are used.

Examples of the alicyclic polyisocyanate include alicyclic diisocyanate. Examples of the alicyclic diisocyanate include 3-isocyanatomethyl-3,5,5-trimethylcyclohexylisocyanate (isophorone diisocyanate, IPDI), 4,4'-, 2,4'- or 2,2'-methylenebis(cyclohexylisocyanate) or a mixture thereof (H₁₂MDI), 1,3- or 1,4-bis(isocyanatomethyl)cyclohexane or a mixture thereof (H₆XDI), bis(isocyanatomethyl)norbomane (NBDI), 1,3-cyclopentene diisocyanate, 1,4-cyclohexane diisocyanate, 1,3-cyclohexane diisocyanate, methyl-2,4-cyclohexane diisocyanate, and methyl-2,6-cyclohexane diisocyanate. As the alicyclic polyisocyanate, preferably, IPDI, H₁₂MDI, and H₆XDI (preferably, 1,3-H₆XDI) are used.

Examples of the aromatic polyisocyanate include aromatic diisocyanate. Examples of the aromatic diisocyanate include 4,4'-, 2,4'- or 2,2'-diphenylmethane diisocyanate or a mixture thereof (MDI), 2,4- or 2,6-tolylene diisocyanate or a mixture thereof (TDI), o-tolidine diisocyanate, 1,5-naphthalene diisocyanate (NDI), m- or p-phenylene diisocyanate or a mixture thereof, 4,4'-diphenyl diisocyanate, and 4,4'-diphenylether diisocyanate.

Examples of the araliphatic polyisocyanate include araliphatic diisocyanate. Examples of the araliphatic diisocyanate include xylylene diisocyanate (1,2-, 1,3-, or 1,4-xylylene diisocyanate or a mixture thereof) (XDI), 1,3- or 1,4-tetramethylxylylene diisocyanate or a mixture thereof (TMXDI), and ω,ω'-diisocyanate-1,4-diethylbenzene. As the araliphatic polyisocyanate, preferably, XDI is used.

As the polyisocyanate, preferably, aliphatic polyisocyanate, alicyclic polyisocyanate, and araliphatic polyisocyanate are used. As the polyisocyanate, more preferably, alicyclic polyisocyanate is used from the viewpoint of improving filterability of the polyurethane dispersion.

The polyisocyanates can be used alone or in combination of two or more.

### (Derivative of Polyisocyanate)

Examples of the derivative of the polyisocyanate include multimers, allophanate derivatives, polyol derivatives, biuret derivatives, urea derivatives, oxadiazinetrione derivatives, carbodiimide derivatives, uretdione derivatives, and uretonimine derivatives of the above-described polyisocyanates.

The derivatives of the polyisocyanates can be used alone or in combination of two or more.

The polyisocyanate component preferably does not contain a derivative of a polyisocyanate and consists of a polyisocyanate. The polyisocyanate component more preferably consists of an alicyclic polyisocyanate.

### [Polyol Component]

The polyol component contains a macropolyol and a hydrophilic group-containing active hydrogen compound.

### (Macropolyol)

The macropolyol contains an aromatic ring-containing polyester polyol.

The aromatic ring-containing polyester polyol is a compound having a hydroxy group at its molecular end and having a number average molecular weight of 400 or more, preferably 500 or more, and 10000 or less, preferably 5000 or less, more preferably 3000 or less.

The aromatic ring-containing polyester polyol preferably has an average functionality of 2, though not limited thereto.

The aromatic ring-containing polyester polyol has an aromatic ring. Specifically, the aromatic ring-containing polyester polyol has an aromatic ring derived from an aromatic ring-containing polyhydric alcohol (described later) and/or an aromatic ring-containing polybasic acid (described later).

The aromatic ring-containing polyester polyol is a reaction product of a polyhydric alcohol and a polybasic acid. That is, the aromatic ring-containing polyester polyol is obtained by allowing a polyhydric alcohol to react with a polybasic acid under known conditions. In other words, the aromatic ring-containing polyester polyol is a condensation polymer obtained by condensation polymerization and is distinguished from a ring-opening polymer (polycaprolactone).

Examples of the polyhydric alcohol include aromatic ring-containing polyhydric alcohols and aromatic ring-free polyhydric alcohols.

Examples of the aromatic ring-containing polyhydric alcohol include aromatic ring-containing diols. Examples of the aromatic ring-containing diol include bisphenol A, bisphenol S, and bisphenol F.

Examples of the aromatic ring-free polyhydric alcohol include dihydric alcohols and trihydric alcohols.

Examples of the dihydric alcohol include alkanediols having 2 to 20 carbon atoms (C), alicyclic ring-containing diols, ether diols having C4 to C10, and heterocycle-containing diols. Examples of the alkanediol having 2 to 20 carbon atoms (C) include 1,2-ethylene glycol, 1,2-propylene glycol, 1,3-propanediol, 1,4-butanediol, 1,3-butanediol, 1,2-butanediol, 1,5-pentanediol, 1,6-hexanediol, neopentyl glycol, 3-methyl-1,5-pentanediol, 2,2,2-trimethylpentanediol, 3,3-dimethylolheptane, and 2,6-dimethyl-1-octene-3,8-diol. Examples of the alicyclic ring-containing diol include 1,3-cyclohexanedimethanol, 1,4-cyclohexanedimethanol, 1,3-cyclohexanediol, 1,4-cyclohexanediol, and hydrogenated bisphenol A. Examples of the ether diol having C4 to C10 include diethylene glycol, triethylene glycol, and dipropylene glycol. Examples of the heterocycle-containing diol include isosorbide (1,4: 3,6-dianhydroglucitol). Examples of the trihydric alcohol include glycerin, trimethylolpropane, and triisopropanolamine.

As the aromatic ring-free polyhydric alcohol, preferably, dihydric alcohol is used. As the aromatic ring-free polyhydric alcohol, more preferably, alkanediol having 2 or more and 6 or less carbon atoms is used. As the aromatic ring-free polyhydric alcohol, further preferably, 1,2-ethylene glycol, neopentyl glycol, and 3-methyl-1,5-pentanediol are used.

The polyhydric alcohols can be used alone or in combination of two or more. As the polyhydric alcohol, preferably, 3-methyl-1,5-pentanediol is used alone or 1,2-ethylene glycol and neopentyl glycol are used in combination.

The polyhydric alcohol preferably does not contain an aromatic ring-containing polyhydric alcohol and consists of an aromatic ring-free polyhydric alcohol.

Examples of the polybasic acid include aromatic ring-containing polybasic acids and aromatic ring-free polybasic acids.

Examples of the aromatic ring-containing polybasic acid include aromatic dicarboxylic acids. Examples of the aromatic dicarboxylic acid include phthalic acid (orthophthalic acid, isophthalic acid, terephthalic acid), toluene dicarboxylic acid, and naphthalene dicarboxylic acid. As the aromatic ring-containing polybasic acid, preferably, phthalic acid is used. As the aromatic ring-containing polybasic acid, more preferably, isophthalic acid and terephthalic acid are used. As the aromatic ring-containing polybasic acid, further preferably, isophthalic acid is used from the viewpoint of providing better feel.

Examples of the aromatic ring-free polybasic acid include saturated aliphatic dicarboxylic acids (C11 to C13), unsaturated aliphatic dicarboxylic acids, alicyclic dicarboxylic acids, other carboxylic acids, and acid anhydrides derived from these carboxylic acids. Examples of the saturated aliphatic dicarboxylic acid (C11 to C13) include oxalic acid, malonic acid, succinic acid, methylsuccinic acid, glutaric acid, adipic acid, 1,1-dimethyl-1,3-dicarboxypropane, 3-methyl-3-ethyl glutaric acid, azelaic acid, and sebacic acid. Examples of the unsaturated aliphatic dicarboxylic acid include maleic acid, fumaric acid, and itaconic acid. Examples of the alicyclic dicarboxylic acid include hexahydrophthalic acid. Examples of the other carboxylic acid include dimer acid, hydrogenated dimer acid, and HET acid. Examples of the acid anhydride include oxalic anhydrides, succinic anhydrides, maleic anhydrides, phthalic anhydrides, 2-alkyl (C12 to C18) succinic anhydrides, tetrahydrophthalic anhydrides, and trimellitic anhydrides.

As the aromatic ring-free polybasic acid, preferably, saturated aliphatic dicarboxylic acid (C11 to C13) is used. As the aromatic ring-free polybasic acid, more preferably, adipic acid and sebacic acid are used. As the aromatic ring-free polybasic acid, further preferably, sebacic acid is used.

The polybasic acids can be used alone or in combination of two or more.

The polybasic acid preferably includes an aromatic ring-containing polybasic acid and an aromatic ring-free polybasic acid from the viewpoint of improving adhesion property. The polybasic acid more preferably consists of an aromatic ring-containing polybasic acid and an aromatic ring-free polybasic acid.

As described above, the aromatic ring-containing polyester polyol is obtained by allowing the polyhydric alcohol to react with the polybasic acid. In such a reaction, at least one of the polyhydric alcohol and the polybasic acid is selected so as to have an aromatic ring.

Specifically, when the polyhydric alcohol is an aromatic ring-containing polyhydric alcohol, the polybasic acid includes an aromatic ring-containing polybasic acid and/or an aromatic ring-free polybasic acid. When the polyhydric alcohol is an aromatic ring-free polyhydric alcohol, the polybasic acid includes at least an aromatic ring-containing polybasic acid. On the other hand, when the polybasic acid is an aromatic ring-containing polybasic acid, the polyhydric alcohol includes an aromatic ring-containing polyhydric alcohol and/or an aromatic ring-free polyhydric alcohol. When the polybasic acid is an aromatic ring-free polybasic acid, the polyhydric alcohol includes at least an aromatic ring-containing polyhydric alcohol.

The aromatic ring-containing polyester polyol is preferably a reaction product of an aromatic ring-free polyhydric alcohol and an aromatic ring-containing polybasic acid.

The aromatic ring-containing polyester polyols can be used alone or in combination of two or more.

The macropolyol can also contain another macropolyol.

The other macropolyol is a compound having a hydroxy group at its molecular end and having a number average molecular weight of 400 or more, preferably 500 or more, and 10000 or less, preferably 5000 or less, more preferably 3000 or less.

The other macropolyol preferably has an average functionality of 2, though not limited thereto.

The other macropolyol is a macropolyol except the above-described aromatic ring-containing polyester polyol. Examples of the other macropolyol include aromatic ring-free polyester polyol, polyether polyol, polycarbonate polyol, polyurethane polyol, epoxy polyol, vegetable oil polyol, polyolefin polyol, acrylic polyol, and vinyl monomer modified polyol. As the other macropolyol, preferably, polyether polyol and polycarbonate polyol are used.

Examples of the polyether polyol include polyoxyalkylene (2 to 3 carbon atoms) polyol and polytetramethylene ether polyol.

Examples of the polyoxyalkylene (2 to 3 carbon atoms) polyol include addition polymers of alkylene oxide having 2 to 3 carbon atoms using a low molecular weight polyol to be described later or a known low molecular weight polyamine as an initiator.

Examples of the alkylene oxide having 2 to 3 carbon atoms include propylene oxide and ethylene oxide. These alkylene oxides can be used alone or in combination of two or more.

Specifically, examples of the polyoxyalkylene (2 to 3 carbon atoms) polyol include polyoxyethylene glycols, polyoxypropylene glycols, and random and/or block copolymers of propylene oxide and ethylene oxide.

The polyoxyalkylene (2 to 3 carbon atoms) polyol further includes polytrimethylene ether glycols.

Examples of the polytrimethylene ether glycol include glycols obtained by polycondensation reaction of 1,3-propanediol derived from plant components.

Examples of the polytetramethylene ether polyol include a ring-opening polymer (polytetramethylene ether glycol (crystalline)) obtained by cationic polymerization of tetrahydrofuran, and amorphous (noncrystalline) polytetramethylene ether glycol that copolymerizes an alkyl-substituted tetrahydrofuran or the above-described dihydric alcohol with a polymerization unit such as tetrahydrofuran.

As the polyether polyol, preferably, polytetramethylene ether polyol is used. As the polyether polyol, more preferably, polytetramethylene ether glycol is used.

Examples of the polycarbonate polyol include polycarbonate diols. Examples of the polycarbonate diol include a ring-opening polymerization product of ethylene carbonate using a low molecular weight polyol (preferably, dihydric alcohol) to be described later as an initiator, and a polycarbonate diol obtained by copolymerizing dihydric alcohols (e.g., 1,4-butanediol, 1,5-pentanediol, 3-methyl-1,5-pentanediol, and 1,6-hexanediol) with the ring-opening polymerization product.

Other macropolyols can be used alone or in combination of two or more.

A blending ratio of the other macropolyol relative to 100 parts by mass of the total amount of the macropolyol is, for example, 20 parts by mass or more, preferably 40 parts by mass or more, and for example, 60 parts by mass or less, preferably 45 parts by mass or less.

### (Hydrophilic Group-Containing Active Hydrogen Compound)

The hydrophilic group-containing active hydrogen compound is a compound containing a hydrophilic group and two or more active hydrogen groups. Examples of the active hydrogen group include a hydroxy group and an amino group.

Examples of the hydrophilic group include a nonionic group and an ionic group. To be more specific, examples of the hydrophilic group-containing active hydrogen compound include an active hydrogen group-containing compound containing a nonionic group, and an active hydrogen group-containing compound containing an ionic group.

The active hydrogen group-containing compound containing a nonionic group is a compound containing a combination of at least one nonionic group and two or more active hydrogen groups. Examples of the nonionic group include a polyoxyethylene group. Examples of the active hydrogen group-containing compound containing a nonionic group include polyoxyethylene glycol, one-end-capped polyoxyethylene glycol, and polyols containing polyoxyethylene side chain.

Examples of the active hydrogen group-containing compound containing an ionic group include an active hydrogen group-containing compound containing an anionic group, and an active hydrogen group-containing compound containing a cationic group.

The active hydrogen group-containing compound containing an anionic group is a compound containing a combination of at least one anionic group and two or more active hydrogen groups. Examples of the anionic group include a carboxy group (carboxylic acid group) and a sulfo group (sulfonic acid group), and preferably, a carboxy group is used. In the active hydrogen group-containing compound containing an anionic group, examples of the active hydrogen group include a hydroxy group and an amino group, and preferably, a hydroxy group is used. That is, as the active hydrogen group-containing compound containing an anionic group, preferably, an organic compound containing a combination of a carboxy group and two hydroxy groups is used.

Examples of the organic compound containing a combination of a carboxy group and two hydroxy groups include carboxy group-containing polyols. Examples of the carboxy group-containing polyol include polyhydroxyalkanoic acids. Examples of the polyhydroxyalkanoic acid include 2,2-dimethylolacetic acid, 2,2-dimethylollactic acid, 2,2-dimethylolpropionic acid (also known as: dimethylolpropionic acid), 2,2-dimethylolbutanoic acid, 2,2-dimethylolbutyric acid, and 2,2-dimethylol valeric acid. As the organic compound containing a combination of a carboxy group and two hydroxy groups, preferably, 2,2-dimethylolpropionic acid is used.

The active hydrogen group-containing compound containing a cationic group is a compound containing a combination of at least one cationic group and two or more active hydrogen groups. Examples of the cationic group include tertiary amino groups (tertiary amine capable of forming a tertiary ammonium salt). In the active hydrogen group-containing compound containing a cationic group, examples of the active hydrogen group include a hydroxy group and an amino group, and preferably, a hydroxy group is used. That is, as the active hydrogen group-containing compound containing a cationic group, preferably, an organic compound containing a combination of a tertiary amino group and two hydroxy groups is used.

Examples of the organic compound containing a combination of a tertiary amino group and two hydroxy groups include N-alkyl dialkanolamine. Examples of the N-alkyl dialkanolamine include N-methyl diethanolamine, N-propyl diethanolamine, N-butyl diethanolamine, and N-methyl dipropanolamine.

As the hydrophilic group-containing active hydrogen compound, preferably, an active hydrogen group-containing compound containing an ionic group is used. More preferably, an active hydrogen group-containing compound containing an anionic group is used from the viewpoint of setting an acid value of a polyurethane resin to be described later within a predetermined range.

The hydrophilic group-containing active hydrogen compounds can be used alone or in combination of two or more.

A blending ratio of the hydrophilic group-containing active hydrogen compound relative to 100 parts by mass of the total amount of the polyol component is, for example, 1 part by mass or more, preferably 2 parts by mass or more, and for example, 10 parts by mass or less, preferably 5 parts by mass or less.

In particular, when the hydrophilic group-containing active hydrogen compound is an active hydrogen group-containing compound containing an anionic group (preferably, a carboxy group), the acid value of the polyurethane resin to be described later can be set within a predetermined range by adjusting the above-described blending ratio within the above range.

### (Low Molecular Weight Polyol)

The polyol component can also contain a low molecular weight polyol (low molecular weight polyol excluding the hydrophilic group-containing active hydrogen compound).

The low molecular weight polyol is a compound having a number average molecular weight of 40 or more and less than 400, preferably 300 or less.

The low molecular weight polyol preferably has a functionality of 2, though not limited thereto.

Examples of the low molecular weight polyol include diol having 2 to 6 carbon atoms, and other low molecular weight polyols (excluding diol having 2 to 6 carbon atoms).

The diol having 2 to 6 carbon atoms is a compound having a number average molecular weight of 40 or more and less than 400, preferably 300 or less, two hydroxyl groups, and 2 to 6 carbon atoms, and examples thereof include alkane diol having 2 to 6 carbon atoms (alkylene glycol having 2 to 6 carbon atoms), ether diol having 2 to 6 carbon atoms, and alkene diol having 2 to 6 carbon atoms.

Examples of the alkane diol having 2 to 6 carbon atoms include ethylene glycol, propylene glycol (1,2- or 1,3-propane diol or a mixture thereof), butylene glycol (1,2-, 1,3-, or 1,4-butanediol or a mixture thereof), 1,5-pentanediol, 1,6-hexanediol, neopentyl glycol, 3-methyl-1,5-pentanediol, and 1,3- or 1,4-cyclohexanediol.

Examples of the ether diol having 2 to 6 carbon atoms include diethylene glycol, triethylene glycol, and dipropylene glycol, and preferably, triethylene glycol is used. As the ether diol having 2 to 6 carbon atoms, preferably, triethylene glycol is used.

Examples of the alkene diol having 2 to 6 carbon atoms include 1,4-dihydroxy-2-butene.

Other low molecular weight polyols are a compound having a number average molecular weight of 40 or more and less than 400, preferably 300 or less, and two or more hydroxy groups in one molecule, and examples thereof include diol having 7 or more carbon atoms (dihydric alcohol) and a low molecular weight polyol having a functionality of three or more.

Diol having 7 or more carbon atoms (dihydric alcohol) is a compound having a number average molecular weight of 40 or more and less than 400, preferably 300 or less, two hydroxy groups in one molecule, and 7 or more carbon atoms. Examples thereof include alkane-1,2-diol having 7 to 20 carbon atoms, 2,6-dimethyl-1-octene-3,8-diol, 1,3- or 1,4-cyclohexanedimethanol and a mixture thereof, hydrogenated bisphenol A, and bisphenol A.

Examples of the diol having 7 or more carbon atoms (dihydric alcohol) also include dihydric polyalkylene oxide having a number average molecular weight of less than 400, preferably 300 or less. Such polyalkylene oxide can be produced as polyethylene glycol (polyoxyethylene ether glycol), polypropylene glycol (polyoxypropylene ether glycol), and polyethylene polypropylene glycol (random or block copolymer) by addition reaction of alkylene oxide such as ethylene oxide and/or propylene oxide with the above-described dihydric alcohol as an initiator. Examples thereof also include polytetramethylene ether glycol having a number average molecular weight of less than 400, preferably 300 or less, obtained by ring-opening polymerization of tetrahydrofuran.

The low molecular weight polyol having a functionality of three or more is a compound having a number average molecular weight of 40 or more and less than 400, preferably 300 or less, and three or more hydroxy groups in one molecule. Examples thereof include trihydric alcohol (low molecular weight triol), tetrahydric alcohol, pentahydric alcohol, hexahydric alcohol, heptahydric alcohol, and octahydric alcohol. Examples of the trihydric alcohol include glycerin, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol. Examples of the tetrahydric alcohol include tetramethylolmethane (pentaerythritol) and diglycerin. Examples of the pentahydric alcohol include xylitol. Examples of the hexahydric alcohol include sorbitol, mannitol, allitol, iditol, darcitol, altritol, inositol, and dipentaerythritol. Examples of the heptahydric alcohol include perseitol. Examples of the octahydric alcohol include sucrose.

Examples of the low molecular weight polyol having a functionality of three or more also include polyalkylene oxide having a functionality of three or more and having a number average molecular weight of 40 or more and less than 400, preferably 300 or less.
Such polyalkylene oxide can be produced as polyethylene polyol, polypropylene polyol, and polyethylene polypropylene polyol (random or block copolymer) by addition reaction of alkylene oxide such as ethylene oxide and/or propylene oxide with the above-described low molecular weight polyol having a functionality of three or more or a known polyamine as an initiator.

The low molecular weight polyols can be used alone or in combination of two or more.

A blending ratio of the low molecular weight polyol relative to 100 parts by mass of the total amount of the polyol component is, for example, 1 part by mass or more, preferably 5 parts by mass or more, and for example, 15 parts by mass or less.

The polyol component preferably does not contain a low molecular weight polyol and consists of a macropolyol and a hydrophilic group-containing active hydrogen compound.

### [Preparation of Isocyanate Group-Terminated Prepolymer]

The isocyanate group-terminated prepolymer is obtained by allowing the polyisocyanate component to react with the polyol component.

As a method of allowing the polyisocyanate component to react with the polyol component, a known polymerization method (e.g., bulk polymerization and solution polymerization) is selected, preferably, solution polymerization is selected from the viewpoint of easier adjustment of reactivity and viscosity.

In solution polymerization, for example, the above-described components are blended in an organic solvent (solvent) under a nitrogen atmosphere, and allowed to react.

In this reaction, the equivalent ratio (isocyanate group/hydroxy group) of the isocyanate group in the polyisocyanate component relative to the active hydrogen group (hydroxy group and/or amino group) in the polyol component exceeds 1, and is, for example, 1.2 or more, preferably 1.3 or more, and for example, 3.0 or less, preferably 2.5 or less. The terminal functional group of the reaction product obtained in this case is an isocyanate group. That is, an isocyanate group-terminated prepolymer is obtained.

The reaction conditions are as follows: the reaction temperature is, for example, 20°C or more, and for example, 110°C or less. The reaction time is 1 hour or more, and for example, 20 hours or less.

Examples of the organic solvent include those organic solvents that are inactive to isocyanate groups and are highly hydrophilic, such as, for example, acetone, methyl ethyl ketone, ethyl acetate, tetrahydrofuran, acetonitrile, and N-methylpyrrolidone. As the organic solvent, preferably, acetonitrile is used.

In the above-described polymerization, for example, a reaction catalyst (e.g., amine, tin, and lead-based) may be added as necessary.

In the above-described reaction, unreacted polyisocyanate component and/or unreacted polyol component can be removed by a known method such as distillation or extraction.

In this manner, the isocyanate group-terminated prepolymer that is a reaction product of the polyisocyanate component and the polyol component is obtained.

When the polyisocyanate component is allowed to react with the polyol component by solution polymerization, the isocyanate group-terminated prepolymer is obtained as a reaction solution containing the isocyanate group-terminated prepolymer and the organic solvent.

The isocyanate group-terminated prepolymer thus obtained is a polyurethane prepolymer having at least one (preferably a plurality of, further preferably two) free isocyanate group at its molecular end. The isocyanate group content (isocyanate group content based on the solid content excluding the solvent) is, for example, 0.5% by mass or more, preferably 1.0% by mass or more, and for example, 5.0% by mass or less, preferably 4.0% by mass or less.

When an ionic group is contained in the reaction product, preferably, a neutralizing agent is added for neutralization to form a salt of the ionic group.

As the neutralizing agent, when the ionic group is an anionic group, a conventional base is used. As the conventional base, ammonia, an amine compound having 1 to 20 carbon atoms, or an alkali metal hydroxide (e.g., sodium hydroxide, potassium hydroxide, and lithium hydroxide) is used. Examples of the amine compound having 1 to 20 carbon atoms include primary amines such as monomethylamine, monoethylamine, monobutylamine, and monoethanolamine; secondary amines such as dimethylamine, diethylamine, dibutylamine, diethanolamine, diisopropanolamine, and methylpropanolamine; and tertiary amines such as trimethylamine, triethylamine, dimethylethylamine, dimethylmonoethanolamine, triisopropanolamine and triethanolamine. When the ionic group is a cationic group, a conventional acid is used. Examples of the conventional acid include mono- or di-carboxylic acids having 1 to 7 carbon atoms, sulfonic acids having 1 to 20 carbon atoms, and inorganic acids. Examples of the dicarboxylic acid having 1 or 7 carbon atoms include formic acid, acetic acid, propionic acid, oxalic acid, and succinic acid. Examples of the sulfonic acid having 1 to 20 carbon atoms include methanesulfonic acid, benzenesulfonic acid, dodecylbenzenesulfonic acid, trifluoromethanesulfonic acid, and p-toluenesulfonic acid. Examples of the inorganic acids include hydrochloric acid, sulfuric acid, and nitric acid.

In particular, when the ionic group is an anionic group (preferably, a carboxy group), the neutralizing agent is added, per 1 equivalent of anionic group, in an amount of 0.6 equivalent or more, preferably 0.8 equivalent or more, and for example, 1.2 equivalent or less, preferably 1.1 equivalent or less.

### <Chain Extender>

Examples of the chain extender include the above-described low molecular weight polyols and amino group-containing compounds.

Examples of the amino group-containing compound include aromatic polyamine, araliphatic polyamine, alicyclic polyamine, aliphatic polyamine, amino alcohol, polyoxyethylene group-containing polyamine, alkoxysilyl compound having a primary amino group or having a primary amino group and a secondary amino group, and hydrazine or derivatives thereof.

Examples of the aromatic polyamine include 4,4'-diphenylmethanediamine and tolylenediamine.

Examples of the araliphatic polyamine include 1,3- or 1,4-xylylene diamine, or mixtures thereof.

Examples of the alicyclic polyamine include 3-aminomethyl-3,5,5-trimethylcyclohexylamine (also known as: isophoronediamine), 4,4'-dicyclohexylmethanediamine, 2,5(2,6)-bis(aminomethyl) bicyclo[2.2.1]heptane, 1,4-cyclohexanediamine, 1-amino-3-aminomethyl-3,5,5-trimethylcyclohexane, bis-(4-aminocyclohexyl) methane, diaminocyclohexane, 3,9-bis(3-aminopropyl)-2,4,8,10-tetraoxaspiro[5,5]undecane, 1,3- and 1,4-bis(aminomethyl) cyclohexane and mixtures thereof.

Examples of the aliphatic polyamine include ethylenediamine, propylenediamine, 1,3-propanediamine, 1,4-butanediamine, 1,5-pentanediamine, 1,6-hexamethylenediamine, diethylenetriamine, triethylenetetramine, tetraethylenepentamine, and 1,3-diaminopentane.

Examples of the aminoalcohol include 2-((2-aminoethyl) amino) ethanol (also known as: N-(2-aminoethyl) ethanolamine), and 2-((2-aminoethyl) amino)-1-methylpropanol (also known as: N-(2-aminoethyl) isopropanolamine).

Examples of the polyoxyethylene group-containing polyamine include polyoxyalkylene etherdiamine such as polyoxyethylene etherdiamine. To be more specific, examples thereof include PEG#1000 diamine manufactured by NOF Corporation, Jeffamine ED-2003, EDR-148, and XTJ-512 manufactured by Huntsman Inc.

Examples of the alkoxysilyl compound having a primary amino group, or having a primary amino group and a secondary amino group include an alkoxysilyl compound having a primary amino group, and an alkoxysilyl compound having a primary amino group and a secondary amino group. Examples of the alkoxysilyl compound having a primary amino group include γ-aminopropyltrimethoxysilane, γ-aminopropyltriethoxysilane, and N-phenyl-γ-aminopropyltrimethoxysilane. Examples of the alkoxysilyl compound having a primary amino group and a secondary amino group include N-β (aminoethyl) γ-aminopropyltrimethoxysilane (also known as: N-2-(aminoethyl)-3-aminopropyltrimethoxysilane), N-β (aminoethyl) γ-aminopropyltriethoxysilane (also known as: N-2-(aminoethyl)-3-aminopropyltriethoxysilane), N-β (aminoethyl) γ-aminopropylmethyldimethoxysilane (also known as: N-2-(aminoethyl)-3-aminopropylmethyldimethoxysilane), and N-β (aminoethyl) γ-aminopropylmethyldiethoxysilane (also known as: N-2-(aminoethyl)-3-aminopropylmethyldiethoxysilane).

Examples of the hydrazine or the derivative thereof include hydrazine (including hydrazine monohydrate), succinic acid dihydrazide, sebacic acid dihydrazide, and adipic acid dihydrazide. As the hydrazine or the derivative thereof, preferably, hydrazine monohydrate is used.

As the chain extender, preferably, hydrazine or a derivative thereof is used.

The chain extender can be prepared in the form of, for example, an aqueous solution (an aqueous chain extender solution).

The chain extenders can be used alone or in combination of two or more.

### <Preparation of Polyurethane Resin>

The polyurethane resin is obtained by allowing the isocyanate group-terminated prepolymer to react with the chain extender.

Specifically, the isocyanate group-terminated prepolymer is allowed to react with the chain extender, for example, in water, to produce a polyurethane resin (polyurethane dispersion).

To allow the isocyanate group-terminated prepolymer to react with the chain extender in water, for example, first, the isocyanate group-terminated prepolymer is added to water, thereby dispersing the isocyanate group-terminated prepolymer in water, and then, the chain extender is added thereto, thereby extending the chain of the isocyanate group-terminated prepolymer with the chain extender.

To disperse the isocyanate group-terminated prepolymer in water, the isocyanate group-terminated prepolymer is added to water under stirring at a ratio of 50 to 1000 parts by mass of water (referred to as water-dispersed water in some cases) relative to 100 parts by mass of the isocyanate group-terminated prepolymer.

Thereafter, the chain extender is dropped in the water in which the isocyanate group-terminated prepolymer is dispersed while stirring, so that the equivalent ratio (active hydrogen group/isocyanate group) of the active hydrogen group (amino group and hydroxy group) of the chain extender relative to the isocyanate group of the isocyanate group-terminated prepolymer is, for example, 0.8 or more and 1.2 or less.

After completion of the dropping of the chain extender, with further stirring, the reaction is completed at, for example, normal temperature. The reaction time till the completion of the reaction is, for example, 0.1 hours or more, and for example, 10 hours or less.

In contrast to the above-described method, water can be added into the isocyanate group-terminated prepolymer to disperse the isocyanate group-terminated prepolymer in water, and then, the chain extender is added thereto, thereby extending the chain of the isocyanate group-terminated prepolymer with the chain extender.

In this method, as necessary, the organic solvent and water can be removed, and furthermore, water can also be added to adjust its solids concentration.

In this manner, the chain of the isocyanate group-terminated prepolymer is extended with the chain extender. Therefore, a polyurethane resin prepared as an aqueous dispersion (polyurethane dispersion) is produced.

The acid value of the polyurethane resin is 7.0 mg KOH/g or more, preferably 8.0 mg KOH/g or more, more preferably 9.0 mg KOH/g or more, and 14.0 mg KOH/g or less, preferably 13.0 mg KOH/g or less, more preferably 10.0 mg KOH/g or less.

The above-described acid value is adjusted to the above-described range, for example, by adjusting the blending ratio of the active hydrogen group-containing compound containing an anionic group (preferably, a carboxy group).

When the above-described acid value is the lower limit or more, the color developability is improved (i.e., color density becomes higher on the surface of a fabric (described later)) in the case of performing textile printing on a fabric (described later).

On the other hand, when the above-described acid value is less than the lower limit, the color developability is lowered in the case of performing textile printing on the fabric (described later).

When the above-described acid value is the upper limit or less, the adhesion property is improved in the case of performing textile printing on the fabric (described later).

On the other hand, when the above-described acid value exceeds the upper limit, the adhesion property is deteriorated in the case of performing textile printing on the fabric (described later).

The above-described acid value can be calculated from the ratio of the above-described components charged.

The total of the urethane group concentration and urea group concentration of the polyurethane resin is 20.0% by mass or less, preferably 15.0% by mass or less, more preferably 12.0% by mass or less, further preferably, from the viewpoint of providing better feel, 10.0% by mass or less, and for example, 5.0% by mass or more, preferably 7.0% by mass or more, more preferably 7.5% by mass or more.

When the total of the urethane group concentration and the urea group concentration is the upper limit or less, the followability to deformation of the fabric (described later) is improved and better feel is provided in the case of performing textile printing on the fabric (described later).

On the other hand, when the total of the urethane group concentration and the urea group concentration exceeds the upper limit, the followability to the deformation of the fabric (described later) and feel are deteriorated in the case of performing textile printing on the fabric (described later).

When the total of the urethane group concentration and the urea group concentration is the lower limit or more, the color developability, adhesion property, and suppression of color transfer (e.g., color transfer from the printed fabric to the other fabric during washing) are improved in the case of performing textile printing on the fabric (described later).

The total of the urethane group concentration and the urea group concentration can be calculated from the ratio of raw material components charged.

The polyurethane resin has an aromatic ring concentration of 5.0% by mass or more, preferably 7.0% by mass or more, more preferably 9.0% by mass or more, more preferably 10.0% by mass or more, and 15.0% by mass or less, preferably 12.0% by mass or less, more preferably 11.0% by mass or less.

When the above-described aromatic ring concentration is the lower limit or more, the color developability and adhesion property are excellent in the case of performing textile printing on the fabric (described later).

On the other hand, when the above-described aromatic ring concentration is less than the lower limit, the color developability and the adhesion property are deteriorated in the case of performing textile printing on the fabric (described later).

When the above-described aromatic ring concentration is the upper limit or less, the followability to the deformation of the fabric (described later) is excellent in the case of performing textile printing on the fabric (described later).

On the other hand, when the above-described aromatic ring concentration exceeds the upper limit, the followability to the deformation of the fabric (described later) is reduced in the case of performing textile printing on the fabric (described later).

The above-described aromatic ring concentration can be calculated from the ratio of the raw material components charged.

The polyurethane dispersion has a solids concentration of, for example, 10% by mass or more, preferably 20% by mass or more, and for example, 50% by mass or less, preferably 40% by mass or less.

### <Use of Polyurethane Dispersion>

The polyurethane dispersion is suitably used as a resin for dispersing a coloring material in an ink composition. When the coloring material is a pigment, it is suitably used as a binder resin for physically fixing the pigment to a fabric.

The ink composition is a raw material for performing textile printing on a fabric or a leather. That is, the ink composition is intended to perform textile printing on a fabric or a leather.

Examples of the fabric include natural fibers and chemical fibers. Examples of the natural fibers include cotton, silk, wool, and hemp. Examples of the chemical fibers include polypropylene fiber, polyester fiber, and polyamide fiber.

When the polyurethane dispersion is used as a resin for dispersing a coloring material in the ink composition, the ink composition contains a coloring material and the above-described polyurethane dispersion.

The coloring material is not particularly limited, and a known coloring material can be used.

The polyurethane dispersion is a component for allowing the coloring material to be dispersed in the ink composition.

A blending ratio of the polyurethane dispersion relative to 100 parts by mass of the coloring material is, for example, 500 parts by mass or more, and, for example, 1000 parts by mass or less, preferably 700 parts by mass or less.

The ink composition is prepared by mixing the coloring material and the polyurethane dispersion.

A known additive (e.g., moisturizing agent, penetrating agent, chelating agent, preservative agent, and pH adjusting agent) can be blended in the ink composition as necessary. That is, the ink composition contains a known additive as necessary. As the moisturizing agent, penetrating agent, chelating agent, preservative agent, and pH adjusting agent, those described in Japanese Unexamined Patent Publication No. 2021-165353 can be used.

The ink composition can also be diluted with water and/or an organic solvent (e.g., ethylene glycol).

When the polyurethane dispersion is used as a binder resin for physically fixing the pigment to the fabric in the ink composition, the ink composition contains a pigment, the above-described polyurethane dispersion, and as necessary, a pigment dispersion.

The pigment is not particularly limited, and a known pigment can be used.

The polyurethane dispersion is a binder resin for physically fixing the pigment to the fabric in the ink composition.

The pigment dispersion is a dispersant for dispersing the pigment.

The ink composition is prepared by mixing the pigment, the polyurethane dispersion, and as necessary, the pigment dispersion.

The above-described additive can also be added to the ink composition. The ink composition can also be diluted with water and/or an organic solvent (e.g., ethylene glycol).

Next, a method of performing textile printing on a fabric using this ink composition is described in detail.

To perform textile printing on a fabric using the ink composition, first, the fabric is pretreated. Unless the fabric is pretreated, interaction between the fabric and the ink composition is weak, and the fabric is impregnated with the ink composition. As a result, the color developability is lowered. In particular, when the fabric is made of chemical fibers, the lowering of the color developability becomes obvious because the above-described interaction is weak as compared with natural fibers.

On the other hand, when the fabric is pretreated, the interaction between the fabric and the ink composition causes the ink composition to aggregate on a surface of the fabric, thereby suppressing impregnation of the fabric with the ink composition. This results in improved color developability.

For pretreating the fabric, the fabric is pretreated using a pretreatment agent.

Examples of the pretreatment agent include organic acids and salts thereof (e.g., formic acid, sodium formate, acetic acid, and sodium acetate), polyvalent metal salts, and cationic compounds.
As the pretreatment agent, preferably, organic acid is used. More preferably, acetic acid and sodium acetate are used. The pretreatment agent can also be prepared in the form of an aqueous solution.

For treating the fabric using the pretreatment agent, the pretreatment agent is applied to the fabric. As a method of applying the pretreatment agent to the fabric, a known method (e.g., spray method) is selected.

Next, the ink composition is applied to the fabric. As a method of applying the ink composition to the fabric, a known method (e.g., spraying method, inkjet method) is selected. In this manner, the ink composition is applied to the fabric.

Next, the fabric (the fabric with the ink composition applied) is heated.

The heating temperature is, for example, 80°C or more, preferably 100°C or more, and for example, 170°C or less. The heating time is, for example, 1 minute or more, preferably 5 minutes or more, and for example, 60 minutes or less, preferably 30 minutes or less, more preferably 15 minutes or less.

In this manner, the fabric is subjected to textile printing (i.e., a textile printed product is obtained).

Since the ink composition contains the above-described polyurethane dispersion, a textile printed product having excellent color developability and adhesion property, and having excellent followability to the deformation of the fabric can be produced.

### <Function and Effect>

In the polyurethane dispersion, the acid value of the polyurethane resin, the total of the urethane group concentration and urea group concentration of the polyurethane resin, and the aromatic ring concentration of the polyurethane resin are predetermined values. Therefore, in the case of performing textile printing on a fabric, the polyurethane dispersion has excellent color developability and adhesion property, and has excellent followability to the deformation of the fabric.

On the other hand, the color developability and the adhesion property have a conflicting (trade-off) relationship.

Specifically, as shown in FIG. 1A, in the case of performing textile printing on a fabric 1, when most of a polyurethane dispersion 2 (specifically, the ink composition containing the polyurethane dispersion 2) stays on a surface 3 of the fabric 1, the color density becomes higher on the surface 3 of the fabric 1, resulting in improved color developability. On the other hand, in such a case, the fabric 1 is hardly impregnated with the polyurethane dispersion 2 (specifically, the ink composition containing the polyurethane dispersion 2), resulting in reduced adhesion property between the fabric 1 and the polyurethane dispersion 2 (specifically, the ink composition containing the polyurethane dispersion 2).

As shown in FIG. 1B, when the fabric 1 is impregnated with most of the polyurethane dispersion 2 (specifically, the ink composition containing the polyurethane dispersion 2), the adhesion property is improved. On the other hand, in such a case, the polyurethane dispersion 2 (specifically, the ink composition containing the polyurethane dispersion 2) hardly exists on the surface 3 of the fabric 1, resulting in reduced color developability.

Therefore, in order to achieve both the color developability and the adhesion property, it is considered to adjust the polyurethane dispersion 2 (specifically, the ink composition containing the polyurethane dispersion 2) that stays on the surface 3 of the fabric 1 and the polyurethane dispersion 2 (specifically, the ink composition containing the polyurethane dispersion 2) that is impregnated in the fabric 1. Specifically, as shown in FIG. 1C, the polyurethane dispersion 2 (specifically, the ink composition containing the polyurethane dispersion 2) is adjusted to the extent of impregnating the surface 3 of the fabric 1 while remaining on the surface 3 of the fabric 1.

On the other hand, as shown in FIG. 1C, even if both the color developability and the adhesion property can be achieved, when the polyurethane dispersion 2 remaining on the surface 3 of the fabric 1 becomes excessively hard, the followability to the deformation of the fabric is reduced. This may result in peeling off of the polyurethane dispersion 2 due to the deformation of the fabric.

In contrast to this, in this polyurethane dispersion, by adjusting the acid value of the polyurethane resin, the total of the urethane group concentration and urea group concentration of the polyurethane resin, and the aromatic ring concentration of the polyurethane resin to the predetermined values, both the color developability and the adhesion property can be achieved, and the followability to the deformation of the fabric can be improved.

Specifically, when the acid value of the polyurethane resin becomes higher, the polyurethane dispersion (specifically, the ink composition containing the polyurethane dispersion) is easily aggregated on the surface of the fabric due to the interaction with the pretreatment agent (preferably, organic acid ions) in the fabric. This can improve the color developability, while the adhesion property tends to be deteriorated.

On the other hand, when the acid value of the polyurethane resin becomes lower, the polyurethane dispersion (specifically, the ink composition containing the polyurethane dispersion) is hardly aggregated due to the interaction with the pretreatment agent (preferably, formic acid ions) in the fabric. As a result, the polyurethane dispersion (specifically, the ink composition containing the polyurethane dispersion) can be easily impregnated into the fabric. This can improve the adhesion property, while the color developability tends to be lowered.

In this polyurethane dispersion, since the acid value is adjusted to a predetermined range, both the color developability and the adhesion property can be achieved.

When the total of the urethane group concentration and urea group concentration of the polyurethane resin becomes higher, the polyurethane dispersion (specifically, the ink composition containing the polyurethane dispersion) is easily aggregated. As a result, the polyurethane dispersion (specifically, the ink composition containing the polyurethane dispersion) tends to stay on the surface of the fabric, and the polyurethane dispersion tends to become harder. Then, the followability to the deformation of the fabric tends to be reduced.

In this polyurethane dispersion, the total of the urethane group concentration and urea group concentration of the polyurethane resin is adjusted to the predetermined value or less. This can improve the followability to the deformation of the fabric.

When the aromatic ring concentration of the polyurethane resin increases, the polyurethane dispersion (specifically, the ink composition containing the polyurethane dispersion) tends to have higher cohesive force and be harder. Then, the followability to the deformation of the fabric tends to be reduced.

When the aromatic ring concentration of the polyurethane resin decreases, the cohesive force of the polyurethane dispersion becomes weak, and the ink composition containing the polyurethane dispersion is less likely to stay on the surface of the fabric, so that the color developability and the adhesion property tends to be reduced.

In this polyurethane dispersion, the aromatic ring concentration of the polyurethane dispersion is adjusted to a predetermined range. Therefore, the color developability and the adhesion property can be improved, and the followability to the deformation of the fabric can be improved.

In this polyurethane dispersion, the acid value of the polyurethane resin, the total of the urethane group concentration and urea group concentration of the polyurethane resin, and the aromatic ring concentration of the polyurethane resin are explained independently for ease of understanding. In practice, however, they do not exert effects independently, but are interdependent and synergistically exert effects.

When a fabric is subjected to textile printing by ejecting droplets of the ink composition containing the above-described polyurethane dispersion from a nozzle using an inkjet method, the ejecting property from the nozzle is required.

In this polyurethane dispersion, since the acid value of the polyurethane resin, the total of the urethane group concentration and urea group concentration of the polyurethane resin, and the aromatic ring concentration of the polyurethane resin are the above-described values, the viscosity can be adjusted, and clogging can be suppressed, and as a result, the ejecting property from the nozzle can be improved.

The ink composition contains the above-described polyurethane dispersion. Therefore, in the case of performing textile printing on a fabric, the ink composition has excellent adhesion property and followability.

### Example

The specific numerical values in blending ratio (content ratio), property value, and parameter used in the following description can be replaced with upper limit values (numerical values defined as "or less" or "below") or lower limit values (numerical values defined as "or more" or "above") of corresponding numerical values in blending ratio (content ratio), property value, and parameter described in the above-described "DESCRIPTION OF THE EMBODIMENTS". The "parts" and "%" are based on mass unless otherwise specified.

### <Details of Components>

1,3-H₆XDI: 1,3-bis(isocyanatomethyl)cyclohexane, trade name "TAKENATE 600", manufactured by Mitsui Chemicals, Inc.
IPDI: Isophorone diisocyanate, Vestanat IPDI, manufactured by Evonic Corporation H₁₂MDI: Methylenebis(cyclohexyl isocyanate), trade name "Vestanat H₁₂MDI", manufactured by Evonic Corporation
HDI: Hexamethylene diisocyanate, manufactured by Tosoh Corporation
PDI: 1,5-pentamethylene diisocyanate, trade name "STABiO PDI", manufactured by Mitsui Chemicals, Inc.
XDI: 1,3-xylylene diisocyanate, trade name "TAKENATE 500", manufactured by Mitsui Chemicals, Inc. TDI: Tolylene diisocyanate
P-2030: Aromatic ring-containing polyester polyol, a reaction product of isophthalic acid and 3-methyl-1,5-pentanediol, manufactured by Kuraray Co., Ltd.
P-2020: Aromatic ring-containing polyester polyol, a reaction product of terephthalic acid and 3-methyl-1,5-pentanediol, manufactured by Kuraray Co., Ltd.
UH-200: UH-200: Polycarbonate diol, number average molecular weight 2000, manufactured by Ube Industries Ltd.
PTMG-2000: Polytetramethylene ether glycol, number average molecular weight 2000, manufactured by Mitsubishi Chemical Holdings
1,4-BG: 1,4-butanediol, manufactured by FUJIFILM Wako Pure Chemical Corporation
EG: Ethylene glycol, manufactured by FUJIFILM Wako Pure Chemical Corporation
DMPA: 2,2-Dimethylolpropionic acid, manufactured by Perstorp
TEA: Triethylamine, manufactured by FUJIFILM Wako Pure Chemical Corporation
HYD·H₂O: Hydrazine monohydrate, manufactured by FUJIFILM Wako Pure Chemical Corporation

### <Preparation of Aromatic Ring-Containing Polyester Polyol>

### Preparation Example 1

An amount 826.7 g of isophthalic acid (IPA) as a polybasic acid (aromatic ring-containing polybasic acid), 1006.4 g of sebacic acid (SbA) as a polybasic acid (aromatic ring-free polybasic acid), and 180.2 g of ethylene glycol (EG) and 898.3 g of neopentyl glycol (NPG) as polyhydric alcohols (aromatic ring-free polyhydric alcohols) were mixed.

Then, the polybasic acids and the polyhydric alcohols were subjected to an esterification reaction by adding 0.1 g of tin octylate (esterification catalyst) to the liquid mixture, and adjusting the reaction temperature to 180 to 220°C under nitrogen flow. Then, predetermined amounts of water and glycol were distilled off to prepare an aromatic ring-containing polyester polyol. The aromatic ring-containing polyester polyol had a hydroxyl value of 44.9 mg KOH/g.

### Preparation Example 2

An amount 1342.1 g of isophthalic acid (IPA) as a polybasic acid (aromatic ring-containing polybasic acid), 1633.8 g of sebacic acid (SbA) as a polybasic acid (aromatic ring-free polybasic acid), and 282.2 g of ethylene glycol (EG) and 1407.1 g of neopentyl glycol (NPG) as polyhydric alcohols (aromatic ring-free polyhydric alcohols) were mixed.

Then, the polybasic acids and the polyhydric alcohols were subjected to an esterification reaction by adding 0.1 g of tin octylate (esterification catalyst) to the liquid mixture, and adjusting the reaction temperature to 180 to 220°C under nitrogen flow. Then, predetermined amounts of water and glycol were distilled off to prepare an aromatic ring-containing polyester polyol. The aromatic ring-containing polyester polyol had a hydroxyl value of 14.0 mg KOH/g.

### Preparation Example 3

A reactor equipped with a thermometer, a nitrogen gas inlet tube, and a stirrer was charged with 42.1 parts by mass of isophthalic acid as a polybasic acid (aromatic ring-containing polybasic acid), 21.4 parts by mass of sebacic acid and 9.3 parts by mass of adipic acid as polybasic acids (aromatic ring-free polybasic acids), 7.7 parts by mass of ethylene glycol, 25.8 parts by mass of neopentyl glycol, and 11.2 parts by mass of butanediol as polyhydric alcohols (aromatic ring-free polyhydric alcohols), and 0.05 parts by mass of dibutyltin oxide, and the charged mixture was esterified at 180 to 230°C for 24 hours. Thereafter, a polycondensation reaction was carried out at 230°C for 24 hours until the acid value became 1 or less to prepare an aromatic ring-containing polyester polyol (acid value 0.3 mg KOH/g, aromatic cyclic concentration 2.53 mol/kg). The aromatic ring-containing polyester polyol had a hydroxyl value of 56.1 mg KOH/g.

### <Preparation of Polyurethane Dispersion>

### Example 1

A four-neck flask equipped with a stirrer, a thermometer, a reflux tube, and a nitrogen inlet tube was charged with 286.5 parts by mass of the aromatic ring-containing polyester polyol of Preparation Example 1, 7.7 parts by mass of DMPA (hydrophilic group-containing active hydrogen compound), and 84.7 parts by mass of acetonitrile.
Then, 46.7 parts by mass of 1.3-H₆XDI (polyisocyanate component) was added thereto, and a urethane-forming reaction was carried out at 80°C until the NCO concentration reached 1.4% by mass, to thereby obtain an isocyanate-terminated prepolymer (a reaction solution containing an isocyanate-terminated prepolymer).

Next, 338.9 parts by mass of acetonitrile was added to the reaction solution, cooled to 30°C, and thereafter, 5.7 parts by mass of TEA (neutralizing agent) was added thereto.

Next, 646.7 parts by mass of ion-exchanged water (water-dispersed water) was gradually added thereto with continuous stirring, to thereby disperse the isocyanate-terminated prepolymer in water. In this manner, an aqueous dispersion of the isocyanate group-terminated prepolymer was prepared.

Next, 3.3 parts by mass of HYD·H₂O was added to the aqueous dispersion of the isocyanate group-terminated prepolymer and then allowed to react for 1 hour.

Next, acetonitrile was distilled off under reduced pressure at 50°C, and thereafter, ion-exchanged water was blended to prepare a polyurethane dispersion (solid content 30% by mass).

### Examples 2 to 15 and Comparative Examples 1 to 6

According to the same procedure as in Example 1, a polyurethane dispersion (solid content 30% by mass) was prepared. The blending formulation was changed in accordance with Tables 1 to 3.

### <Evaluation>

### [Acid value]

The acid value of the polyurethane resin in each of Examples and Comparative Examples was calculated from the ratio of the raw material components charged. The results are shown in Tables 1 to 3.

### [Urethane group and urea group concentrations]

The urethane group and urea group concentration of the polyurethane resin in each of Examples and Comparative Examples was calculated from the ratio of the raw material components charged. The results are shown in Tables 1 to 3.

### [Aromatic ring concentration]

The aromatic ring concentration of the polyurethane resin in each of Examples and Comparative Examples was calculated from the ratio of the raw material components charged. The results are shown in Tables 1 to 3.

### [Color developability]

A cloth of shirting No. 3 (100% cotton) was cut into a piece having a size of 210 mm long and 30 mm wide to be prepared as a fabric.

Next, 4.5 g of acetic acid, 6.2 g of sodium acetate, and 89.3 g of water were mixed to prepare a pretreatment agent.

Next, 40.0 g of the polyurethane dispersion (solids concentration 30% by mass) of each of Examples and Comparative Examples, 8.0 g of a coloring material (Dyestone X Color, Blue MX, manufactured by Matsui Shikiso Chemical Co., Ltd., active ingredient 25% by mass), 20.0 g of ethylene glycol, and 32.0 g of water were mixed to prepare an ink composition.

Next, approximately 1.2 g of the pretreatment agent was applied to the fabric using a sprayer. Then, approximately 2 g of the ink composition was applied to the fabric using a sprayer.

Thereafter, this fabric was subjected to a heat treatment at 110°C for 10 minutes. In this manner, a textile printed product was obtained.

The textile printed product was visually observed in terms of color developability. The color developability was evaluated by the following criteria. The results are shown in Tables 1 to 3.

### {Criteria}

4: A film was formed on the cloth, and the color developability was significantly high.
3: A film was formed on the cloth, and the color developability was slightly high.
2: The ink composition had penetrated into the cloth, and the color developability was slightly low.
1: The ink composition had penetrated into the cloth, and the color developability was significantly low.

### [Adhesion property]

A cloth of shirting No. 3 was cut into a piece having a size of 50 mm long and 50 mm wide, and the cut piece was moistened with distilled water, and then used as a white cloth for rubbing.

The textile printed product obtained in the color developability test and the white cloth for rubbing were attached to a No. 428 Gakushin-type abrasion tester (manufactured by Yasuda Seiki Seisakusho, Ltd., Friction tester II type) and tested with a load of 200 g, an abrading distance of 100 mm, and a reciprocating frequency of 100 times (30 times/minute).

The textile printed product after the test was visually observed in terms of adhesion property of the ink layer to the shirting No. 3. The adhesion property was evaluated by the following criteria. The results are shown in Tables 1 to 3. In Comparative Example 5, the fabric was excessively impregnated with the ink composition, failing to observe the adhesion property.

### {Criteria}

4: The ink layer did not peel off and all the ink film remained.
3: A part of the ink layer peeled off, but more than half of the ink film remained.
2: More than half of the ink layer peeled off.
1: The entire ink layer peeled off.

### [Color transfer]

For the white cloth for rubbing obtained in the adhesion property test, an L value (the higher the value, the whiter the color and the lower the degree of contamination) was measured using a spectro color difference meter (Spectro Color Meter 2000, manufactured by Nippon Denshoku Industries, Co., Ltd.). The L value of the white cloth for rubbing before the test was 90 or more. The color transfer was evaluated by the following criteria. The results are shown in Tables 1 to 3.

### {Criteria}

4: The L value was 90 or more and no color transfer was found.
3: The L value was 85 or more and less than 90, and color transfer was slightly found.
2: The L value was 70 or more and less than 85, and color transfer was found.
1: The L value was 70 or less and color transfer was significantly found.

### [Feel]

The textile printed product obtained in the color developability test was observed by a touch. The feel was evaluated by the following criteria. The results are shown in Tables 1 to 2.

### {Criteria}

4: Softness was felt.
3: Softness was slightly felt.
2: Hardness was slightly felt.
1: Hardness was felt.

### [Followability]

A textile printed product was produced according to the method of producing a textile printed product obtained in the color developability test, except that a polyester flat rubber was used instead of the shirting No. 3.

An operation in which the obtained textile printed product was extended 1.5 times in the vertical direction and then returned to its original state was repeated 10 times, and thereafter, the state of the ink layer was visually observed. The followability was evaluated by the following criteria. The results are shown in Tables 1 and 2.

### {Criteria}

4: No particular change was found.
3: Lifting was observed in a part of the ink layer, but no cracking was found.
2: Lifting and cracking were found in a part of the ink layer.
1: Cracking was found in most part of the ink layer.

### [Solvent Dilution Viscosity]

By adding distilled water, the polyurethane dispersion (solids concentration 35% by mass) of each of Examples and Comparative Examples was prepared so as to have a solids concentration of 20% by mass, and its viscosity at 25°C was measured with a viscometer (model TVB-25L, manufactured by Toki Sangyo Co., Ltd.). In addition, the viscosity at 25°C was measured in the same manner, except that isopropanol was used instead of distilled water. A viscosity increase rate of the viscosity prepared with isopropanol relative to the viscosity prepared with distilled water was evaluated by the following criteria. The results are shown in Tables 1 and 2.

### {Criteria}

4: Less than 3.0 times.
3: 3.0 times or more and less than 5.0 times.
2: 5.0 times or more and less than 10.0 times.
1: 10 times or more.

### [Filterability of Polyurethane Dispersion (PUD Filterability)]

Using a syringe, 20 g of the polyurethane dispersion (solids concentration 35% by mass) of each of Examples and Comparative Examples was aspirated, and extruded with a syringe filter having a different hole diameter attached, and the filterability was evaluated by the following criteria.

### {Criteria}

4: Everything passed through a 0.45 µm-diameter hole.
3: Everything passed through a 3 µm-diameter hole.
2: Everything passed through a 5 µm-diameter hole.
1: Nothing passed through the 5 µm-diameter hole.

### [Table 1]

**TABLE 1**

| Example No. | | | | | | Ex. 1 | Ex. 2 | Ex. 3 | Ex. 4 | Ex. 5 | Ex. 6 | Ex. 7 |
|---|---|---|---|---|---|---|---|---|---|---|---|---|
| | | Polyisocyanate component | | Alicyclic polyisocyanate | 1,3-[I₆XD] | 46.7 | - | - | - | - | - | - |
| | | | | | IPDI | - | 52.5 | - | 40.4 | 49.7 | 59.6 | 55.9 |
| | | | | | H₂MDI | - | - | 60.3 | - | - | - | - |
| | | | | Aliphatic polyisocyanate | HDI | - | - | - | - | - | - | - |
| | | | | | PDI | - | - | - | - | - | - | - |
| | | | | Araliphatic polyisocyanate | XD1 | - | - | - | - | - | - | - |
| | | | | Aromatic polyisocyanate | TDI | - | - | - | - | - | - | - |
| Polyurethane dispersion | | Polyol component | Macropolyol | Aromatic ring-containing polyester polyol | Preparation Example 1 | 286.5 | 281.1 | 273.7 | - | - | - | 154.2 |
| | | | | | Preparation Example 2 | - | - | - | 293.9 | 286.7 | 266.8 | - |
| | | | | | Preparation Example 3 | - | - | - | - | - | - | - |
| | | | | | P-2030 | - | - | - | - | - | - | - |
| | Isocyanate group-terminated prepolymer | | | | P-3020 | - | - | - | - | - | - | - |
| | | | | Other macropolyols | UH-200 | - | - | - | - | - | - | 123.3 |
| | | | | | PTMG-2000 | - | - | - | - | - | - | - |
| | | | Low molecular weight polyol | | 1,4-BG | - | - | - | - | - | - | - |
| | | | | | EG | - | - | - | - | - | - | - |
| | | | Hydrophilic group-containing active hydrogen compound | | DMPA | 7.7 | 7.5 | 7.3 | 7.5 | 6.0 | 11.4 | 7.5 |
| | | Isocyanate group concentration of isocyanate group-terminated prepolymer (mass%) | | | | 1.4 | 1.3 | 1.3 | 1.0 | 1.3 | 1.5 | 1.4 |
| | | Neutralizing agent | | | TEA | 5.7 | 5.6 | 5.4 | 5.6 | 4.5 | 8.4 | 5.6 |
| | | Solvent | | Acetonitrile | At start of reaction | 84.7 | 84.7 | 84.8 | 84.9 | 84.8 | 94.6 | 84.7 |
| | | | | | At completion of reaction | 338.9 | 339.0 | 339.1 | 339.7 | 3392 | 338.6 | 338.8 |
| | Ion-exchanged water | | | | | 679.4 | 679.4 | 679.4 | 679.4 | 679.4 | 679.4 | 679.4 |
| | Chain extender | | | | HYD·H₂O | 3.3 | 3.2 | 3.1 | 2.5 | 3.0 | 3.6 | 3.4 |
| | Acid value (mg KOH/g) | | | | | 9.2 | 9.0 | 8.8 | 9.0 | 7.2 | 13.6 | 9.0 |
| | Aromatic ring concentration (mass%) | | | | | 10.9 | 10.7 | 10.5 | 11.2 | 11.0 | 10.2 | 5.9 |
| | Urethane group and urea group concentrations (mass%) | | | | | 8.0 | 7.8 | 7.6 | 6.0 | 7.4 | 8.9 | 8.3 |
| Evaluation | Color developability | | | | | 4 | 4 | 4 | 4 | 3 | 4 | 4 |
| | Adhesion property | | | | | 4 | 4 | 4 | 4 | 4 | 3 | 3 |
| | Color transfer | | | | | 4 | 4 | 4 | 3 | 4 | 4 | 3 |
| | Feel | | | | | 4 | 4 | 4 | 4 | 4 | 4 | 4 |
| | Followability | | | | | 4 | 4 | 4 | 4 | 4 | 4 | 4 |
| | Solvent dilution viscosity | | | | | 4 | 4 | 4 | 4 | 4 | 3 | 4 |
| | PUD filterability | | | | | 4 | 4 | 4 | 4 | 3 | 4 | 4 |

### [Table 2]

**TABLE 2**

| Example No. | | | | | | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|---|---|
| | | Polyisocyanate component | | Alicyclic polyisocyanate | 1,3-H₆XDI | - | - | - | - | - | - | - | - |
| | | | | | IPDI | 507 | - | - | - | 60.5 | 60.5 | 60.5 | 79.0 |
| | | | | | H₁₂MDI | - | - | - | - | - | - | - | - |
| | | | | Aliphatic polyisocyanate | IIDI | - | 41.2 | - | - | - | - | - | - |
| | | | | | PDI | - | - | 38.2 | - | - | - | - | - |
| | | | | Araliphatic polyisocyanate | XDI | - | - | - | 48.2 | - | - | - | - |
| | | | | Aromatic polyisocyanate | TDI | - | - | - | - | - | - | - | - |
| | | Polyol component | Macropolyol | Aromatic ring-containing polyester polyol | Preparation Example 1 | 208.2 | 291.7 | 294.6 | 158.4 | - | - | - | 246.9 |
| | | | | | Preparation Example 2 | - | - | - | - | - | - | - | - |
| Polyurethane dispersion | | | | | Preparation Example 3 | - | - | - | - | - | - | - | - |
| | Isocyanate group-terminated prepolymer | | | | P-2030 | 74.7 | - | - | - | 136.1 | 136.1 | - | - |
| | | | | | P-2020 | - | - | - | - | - | - | 136.1 | - |
| | | | | Other macropolyols | UH-200 | - | - | - | 126.7 | 136.1 | - | 136.1 | - |
| | | | | | PTMG-2000 | - | - | - | - | - | 136.1 | - | - |
| | | | Low molecular weight polyol | | 1,4-BG | - | - | - | - | - | - | - | - |
| | | | | | EG | - | - | - | - | - | - | - | 6.1 |
| | | | Hydrophilic group-containing active hydrogen compound | | DMPA | 7.5 | 7.8 | 7.9 | 7.5 | 7.8 | 7.8 | 7.8 | 7.5 |
| | | Isocyanate group concentration of isocyanate group-terminated prepolymer (mass%) | | | | 1.3 | 1.4 | 1.4 | 1.4 | 1.5 | 1.5 | 1.5 | 2.0 |
| | | Neutralizing agent | | | TEA | 5.6 | 5.8 | 5.8 | 5.6 | 5.8 | 5.8 | 5.8 | 5.6 |
| | | Solvent | | Acetonitrile | At start of reaction | 84.8 | 84.7 | 84.7 | 84.7 | 84.6 | 84.6 | 84.6 | 84.4 |
| | | | | | At completion of reaction | 339.1 | 338.9 | 338.8 | 338.7 | 338.5 | 338.5 | 338.5 | 337.4 |
| | lon-exchanged water | | | | | 679.4 | 679.4 | 679.4 | 679.4 | 679.4 | 679.4 | 679.4 | 679.4 |
| | Chain extender | | | | HYD·H₂O | 3.1 | 3.3 | 3.4 | 3.5 | 3.7 | 3.7 | 3.7 | 4.8 |
| | Acid value (mg KOH/g) | | | | | 9.0 | 9.4 | 9.4 | 9.0 | 9.3 | 9.3 | 9.3 | 9.0 |
| | Aromatic ring concentration (mass%) | | | | | 14.3 | 11.1 | 11.3 | 11.8 | 11.5 | 11.5 | 11.5 | 9.4 |
| | Urethane group and urea group concentrations (mass%) | | | | | 7.5 | 8.1 | 8.2 | 8.5 | 9.0 | 9.0 | 9.0 | 11.7 |
| Evaluation | Color developability | | | | | 4 | 4 | 4 | 4 | 4 | 4 | 4 | 4 |
| | Adhesion property | | | | | 4 | 4 | 4 | 4 | 3 | 3 | 3 | 4 |
| | Color transfer | | | | | 4 | 4 | 4 | 4 | 4 | 4 | 4 | 4 |
| | Feel | | | | | 3 | 4 | 4 | 4 | 4 | 4 | 3 | 3 |
| | Followability | | | | | 4 | 4 | 4 | 4 | 4 | 4 | 4 | 4 |
| | Solvent dilution viscosity | | | | | 4 | 4 | 4 | 4 | 4 | 4 | 4 | 4 |
| | PUD filterability | | | | | 3 | 3 | 3 | 3 | 4 | 4 | 4 | 4 |

### [Table 3]

**TABLE 3**

| Comparative Example No. | | | | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|
| | | Polyisocyanate component | | Alicyclic polyisocyanate | 1,3-H₆XDI | - | - | - | - | - | - |
| | | | | | IPDI | - | 136.0 | 57.0 | 52.5 | 49.3 | 59.9 |
| | | | | | H₁₂MDI | - | - | - | - | - | - |
| | | | | Aliphatic polyisocyanate | HDI | - | - | - | - | - | - |
| | | | | | PDI | - | - | - | - | - | - |
| | | | | Araliphatic polyisocyanate | XDI | - | - | - | - | - | - |
| | | | | Aromatic polyisocyanate | TDI | 28.1 | - | - | - | - | - |
| | | Polyol component | Macropolyol | Aromatic ring-containing polyester polyol | Preparation Example 1 | - | - | 111.1 | 168.7 | 288.6 | 264.8 |
| | | | | | Preparation Example 2 | - | - | - | - | - | - |
| Polyurethane dispersion | | | | | Preparation Example 3 | 100 | - | - | - | - | - |
| | Isocyanate group-terminated prepolymer | | | | P-2030 | - | 163.2 | - | 112.4 | - | - |
| | | | | | P-2020 | - | - | - | - | - | - |
| | | | | Other rnacropolyols | UII-200 | - | - | 165.1 | - | - | - |
| | | | | | PTMG-2000 | - | - | - | - | - | - |
| | | | Low molecular weight polyol | | - | 4.2 | 29.4 | - | - | - | - |
| | | | | | 1,4-BG | - | - | - | - | - | - |
| | | | Hydrophilic group-containing active hydrogen compound | | DMPA | 8.8 | 8.4 | 7.5 | 7.5 | 5.0 | 12.6 |
| | | Isocyanate group concentration of isocyanate group-terminated prepolymer (mass%) | | | | 0.1 or less | 2.5 | 1.5 | 1.3 | 1.4 | 1.4 |
| | | Neutralizing agent | | | TEA | 6.7 | 6.2 | 5.6 | 5.6 | 3.7 | 9.3 |
| | | Solvent | | Acetonitrile | At start of reaction | - | 83.9 | 84.7 | 84.7 | 84.7 | 84.7 |
| | | | | | At completion of reaction | - | 335.6 | 338.7 | 339.0 | 338.9 | 339.9 |
| | | | | Methyl ethyl ketone | At start of reaction | 94.1 | - | - | - | - | - |
| | | | | | At completion of reaction | 0.0 | - | - | - | - | - |
| | Ion-exchanged water | | | | | 710.0 | 679.4 | 679.4 | 679.4 | 679.4 | 679.4 |
| | Chain extender | | | | HYD·H₂O | - | 6.7 | 3.5 | 3.2 | 3.3 | 3.3 |
| | Acid value (mg KOH/g) | | | | | 24.9 | 10.0 | 9.0 | 9.0 | 6.0 | 15.0 |
| | Aromatic ring concentration (mass%) | | | | | 21.9 | 13.8 | 4.2 | 16.0 | 11.0 | 10.1 |
| | Urethane group and urea group concentrations (mass%) | | | | | 16.9 | 20.3 | 8.5 | 7.8 | 7.3 | 8.9 |
| Evaluation | Color developability | | | | | 4 | 4 | 2 | 4 | 1 | 4 |
| | Adhesion property | | | | | 2 | 4 | 2 | 3 | | 2 |
| | Color transfer | | | | | 4 | 4 | 1 | 4 | 3 | 4 |
| | Feel | | | | | 1 | 1 | 4 | 2 | 4 | 3 |
| | Followability | | | | | 2 | 2 | 2 | 2 | | 3 |
| | Solvent dilution viscosity | | | | | 1 | 3 | 4 | 3 | 4 | 1 |
| | PUD filterability | | | | | 4 | 2 | 4 | 2 | 1 | 4 |

While the illustrative embodiments of the present invention are provided in the above-described invention, such is for illustrative purpose only and it is not to be construed restrictively. Modification and variation of the present invention that will be obvious to those skilled in the art is to be covered by the following claims.

### Industrial Applicability

The polyurethane dispersion and the ink composition according to the present invention can be suitably used in, for example, textile printing on a fabric or a leather.

## Claims

1. A polyurethane dispersion comprising a polyurethane resin dispersed in water,
wherein
the polyurethane resin is a reaction product of an isocyanate group-terminated prepolymer and a chain extender,
the isocyanate group-terminated prepolymer is a reaction product of a polyisocyanate component and a polyol component comprising a macropolyol and a hydrophilic group-containing active hydrogen compound,
the macropolyol comprises an aromatic ring-containing polyester polyol,
the polyurethane resin has an acid value of 7.0 mg KOH/g or more and 14.0 mg KOH/g or less,
a total of a urethane group concentration and a urea group concentration of the polyurethane resin is 20.0% by mass or less, and
the polyurethane resin has an aromatic ring concentration of 5.0% by mass or more and 15.0% by mass or less.

2. The polyurethane dispersion according to claim 1, wherein the total of the urethane group concentration and urea group concentration of the polyurethane resin is 10.0% by mass or less.

3. The polyurethane dispersion according to claim 1, wherein the polyisocyanate component comprises an alicyclic polyisocyanate.

4. The polyurethane dispersion according to claim 1, wherein the hydrophilic group-containing active hydrogen compound is an anionic group-containing active hydrogen compound.

5. The polyurethane dispersion according to claim 1, wherein the aromatic ring-containing polyester polyol is a reaction product of a polyhydric alcohol and a polybasic acid, and
the polybasic acid comprises an aromatic ring-containing polybasic acid and an aromatic ring-free polybasic acid.

6. The polyurethane dispersion according to claim 1, wherein the aromatic ring-containing polybasic acid is isophthalic acid.

7. An ink composition comprising the polyurethane dispersion according to claim 1.

8. The ink composition according to claim 7, for textile printing on a fabric or a leather.
